# EUROPEAN PATENT SPECIFICATION

(11) **EP 2 275 609 B1**
(45) Date of publication and mention of the grant of the patent: **11.05.2022**
(21) Application number: 10158155.1
(22) Date of filing: 29.03.2010
(51) Int. Cl.: E03C 1/04, F16L 19/025, F16L 23/032

(54) **Joint apparatus for connecting a faucet and a water pipe**
Vorrichtung zum Verbinden eines Wasserhahns mit einer Wasserleitung
Dispositif pour connecter un robinet avec un conduit d'eau

(30) Priority: 03.04.2009 FI 20095364
(43) Date of publication of application: 19.01.2011
(73) Proprietor: ORAS OY, 26100 Rauma (FI)
(72) Inventor: Nilsson, Pekka, 26100 Rauma (FI)
(74) Representative: Berggren Oy

(56) References cited:
- AU-A- 6 395 265
- DE-A1- 2 031 353
- DE-A1- 19 526 316
- DE-A1-102007 046 203
- DE-A1-102008 053 380
- DE-B3-102006 015 652
- FR-A5- 2 196 053
- US-A- 4 025 092
- US-B1- 6 945 569

## Description

The invention relates to a joint apparatus for connecting a faucet and a water pipe.

When installing a faucet/mixer to a wall, the faucet body and a water pipe emerging from the wall are connected to each other by using a coupler, by which the water pipe is connected to the faucet body/mixer. The purpose of a coupler is to provide a watertight joint between a water pipe and a mixer.

The joint between a faucet body and a water pipe consists of a coupler, an attachment nut, and possibly an eccentric fitting. These above-mentioned components, in the above-mentioned order, establish a joint or connection. Thus, a first end of the coupler is threadingly fastened to the faucet body and a second end of the coupler is provided with a flange/bracket, which lies at a right angle relative to the coupler's center axis and which has planar flat surfaces. These surfaces are co-directional with a mid-plane of the flange. Between the outermost planar surface of the coupler's flange and the end of the eccentric fitting/water pipe is a liner capable of sealing the joint.

A wall-mounted mixer model is installed to two water pipe ends, generally at a 150 mm distance from each other, by means of the above-described joints. When used between the end of a water pipe and the attachment nut, the purpose of eccentric fittings is to correct the spacing error between the ends of water pipes. It is also possible that the ends of water pipes extend to an unequal extent from a wall surface, resulting in a similar installation flaw. The tolerance imposed by a spacing error is generally taken care of by a leeway designed in the context of a joint. On the other hand, the misalignment error resulting from the use of eccentric fittings has not been remedied in any way. The joint or connection provided by eccentric fittings of the prior art between a faucet body and a water pipe is forced and inflexible, and so is the connection constructed directly on a water pipe without an eccentric fitting.

In the following some prior art solutions are introduced:
Document US 6945569 B1 discloses a union for connection two conduits, which is applicable in pressure transmitting hammer unions, which enable two coaxial sections of conduit to be connected without rotating the conduit sections. The solution is based on adjusting the two conduit sections together and locking them together by means of a wing nut.
Document DE 10 2007 046203 A1 discloses a connecting arrangement wherein the arrangement has a threaded sleeve attached over a borehole in a wall of a hollow body. The sleeve has a sealing seat at its front end turned away from the borehole. A coupling nut is screwable on the sleeve and surrounds a front end of a pipeline connecting the pipeline and the hollow body together.
Document DE 2031353 A1, in turn, discloses an connecting arrangement wherein two sections to be connected are mutually directly locked by means of a union nut.
Document US 4025092 A discloses a solution for directly integrating two sections of fluid carrying conduits by arranging a seat element to one section of conduit. A sleeve element is placed over the seat element and is provided with an interior spherical surface for engagement with the exterior spherical surface of the seat element. An externally threaded union secured to another section of tubint is provided with a thin flexible flange for engagement with the interior spherical surface of the seat element in a stressed relation when engaged by the sleeve element.
Document DE 10 2006 015652 B3 discloses a fitting to connect a pipe section to a screw connection. The fitting has a cap nut with a spring limit shoulder to press the thickened end of the pipe section durably under spring tension at the sealing seat. The shoulder is in one piece with the cap nut.
Document DE 19526316 A1, in turn, discloses a tube connector having a connecting member, a nut, and a tube, wherein the formation cannot be overtightened. To connect the connecting member to the tube, the tube includes a formation with two formation portions. The first formation portion has a first tensioning face which extends parallel to an end face of the connecting member. The second formation portion has a second tensioning face extending in such a way which corresponds to the second conical bore of the nut.
Document FR 2196053 discloses a connecting device for tubes and a sealing comprising a female threaded nipple or threaded and is threaded at both ends, a nut adapted to be screwed onto said nipple, a bushing gasket integral with the end of a tube and terminating in a tip. Document DE 10 2008 053380 discloses a connection of a pipe union with a female connector. The female connector is provided with a thread and a nut is configured to lock the the pipe union with the female connector by means of said threading.

A problem with prior art solutions is the inflexibility of a joint between a water pipe and a mixer and the misalignment error of eccentric fittings, both inducing stress on the joint and the water pipes. Especially in installations conducted in old buildings and pipe systems, such stresses and strains applied to water pipes in the process of installing a mixer may result in damage to water pipes and a deterioration of the joint tightness. Another drawback is the need of a post-tightening procedure, caused by eccentric fittings and performed on the installation, said tightening inflicting even more stress on faucet elbows present inside the structures.

It is an objective of the invention to mitigate prior art problems in a connection or joint between a water pipe and a faucet body/mixer. According to the invention, this objective is accomplished by a joint apparatus according to the features set forth in claim 1. In the joint apparatus, the planar mutually parallel joint surfaces, co-directional with a mid-plane of the outward directed bracket in a coupler of the prior art, are at least partially replaced by surfaces different from those mentioned above. According to one preferred embodiment of the invention, the attachment nut also has a joint surface of its inward directed bracket shaped in a complementary manner. According to the invention, there is provided a floatingly mounting connection and a coupler capable of removing stresses inflicted in structures and/or water pipes in the process of installation and post-tightening.

The invention is characterized by what is presented in the characterizing clauses of independent claim 1. Other preferred embodiments of the invention are disclosed in sub-claims.

The invention will now be described more precisely with reference to the accompanying drawings, in which
fig. 1 shows generally a connection between a faucet body/mixer and a water pipe,
fig. 2 shows a construction of the prior art with the connection theoretically in alignment,
fig. 3 shows a construction of the prior art with the connection a couple of degrees out of alignment,
fig. 4 shows a construction of the invention with the connection theoretically in alignment,
fig. 5 shows a construction of the invention with the connection a couple of degrees out of alignment, and
fig. 6 shows one embodiment for a coupler's bracket.

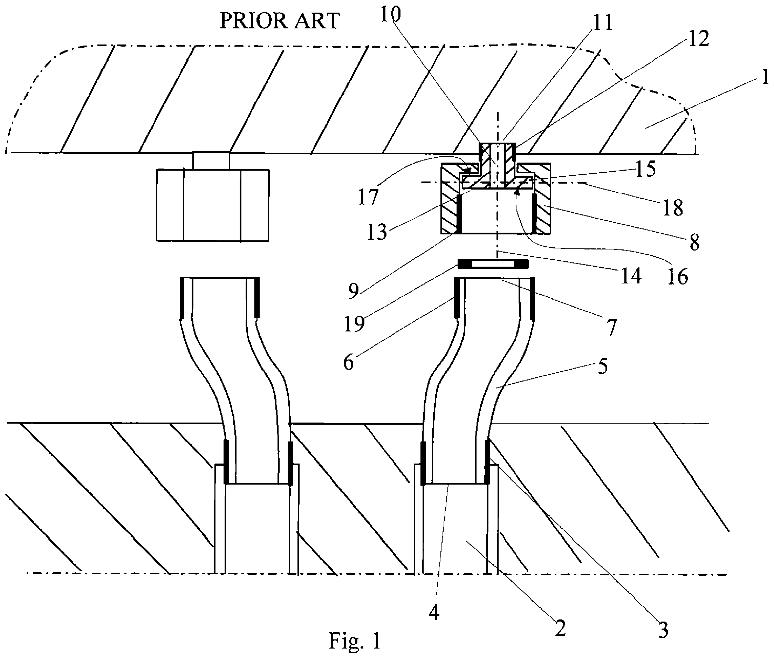

Depicted in fig. 1 is a connection or joint of the prior art between a faucet body/mixer 1 and the end of a water pipe 2. To the ends of the water pipes 2 are by threads 3 fastened eccentric fittings 5 at a first end 4 thereof, which fittings are by threads 6 fastened at a second end 7 thereof to an attachment nut 8 provided with complementary threads 9. Between the attachment nut 8 and the faucet body 1 is a coupler 10 of the prior art. Hence, a first end 11 of the coupler 10 will be by threads 12 attached to the faucet body 1, and a second end 13 of the coupler is provided with an outward directed bracket/flange 15, present at a right angle relative to a center axis 14 of the coupler, and having planar mutually parallel flat surfaces 16 and 17. These surfaces 16 and 17 are co-directional with a mid-plane 18 of the bracket 15. Between the outermost planar surface 16 of the coupler's 10 bracket 15 and the eccentric fitting's 5 second end 7 is a liner 19 capable of sealing the joint.

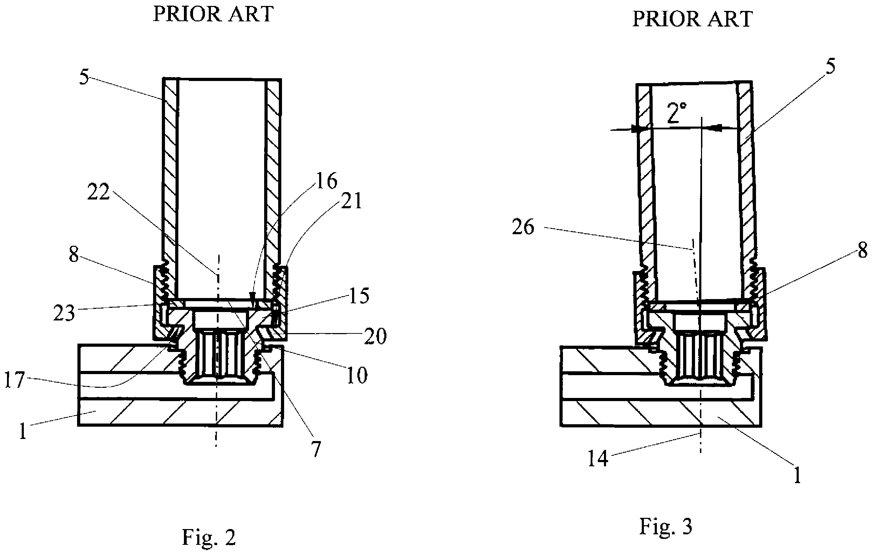

Depicted in fig. 2 is a prior art construction for a connection, when the connection between the eccentric fitting 5 and the faucet body 1 is theoretically in alignment. In this case, the planar surfaces 16 and 17 of the coupler's 10 bracket 15 are co-directional with the surface of the eccentric fitting's 5 second end 7, as well as with a flat surface 21 of the attachment nut's 8 inward directed bracket 20, said surface 21 being perpendicular to the attachment nut's center axis and the coupler's center axis 14 (when the connection or joint is in alignment, the axes are coinciding). Figs. 2 and 3 illustrate how to connect the eccentric fitting 5 to the attachment nut 8, but, as previously pointed out, a water pipe can also be fastened directly to an attachment nut without an eccentric fitting.

All joint surfaces, i.e. the surfaces 16 and 17 of the coupler's 10 bracket 15, both surfaces of the attachment nut's inward directed bracket 20, as well as the eccentric fitting's 5 second end 7, are planar surfaces, which planar surfaces are additionally co-directional relative to each other. Moreover, between the coupler 10 and the eccentric fitting's 5 second end 7 is a liner 23. When such a prior art construction is theoretically in alignment, as indicated in fig. 2, the coupler 10 works flawlessly and does not cause problems by stressing the joint or the water pipe.

Depicted in fig. 3 is a prior art construction for a connection, when the connection between the eccentric fitting 5 and the faucet body 1 is a couple degrees out of alignment. In this case, a center axis 26 of the attachment nut 8 deviates from the coupler's center axis 14. When the connection or joint is out of alignment, the water pipes and the faucet body 1 will be subjected to extra stresses which may cause damage to the joint, the water pipe, and/or the faucet body. Particularly in installation conducted in old buildings and pipe systems, such stresses and strains applied to water pipes in the process of installing the faucet body 1 may result in damage to water pipes and a deterioration of the joint tightness. Another drawback is the need of a post-tightening procedure, caused by eccentric fittings and performed on the installation, said tightening inflicting even more stress on faucet elbows present inside the structures. The inflexibility of a joint between the water pipe and the faucet body 1 and the misalignment error of the eccentric fittings 5 induce stress on the joint and the water pipes.

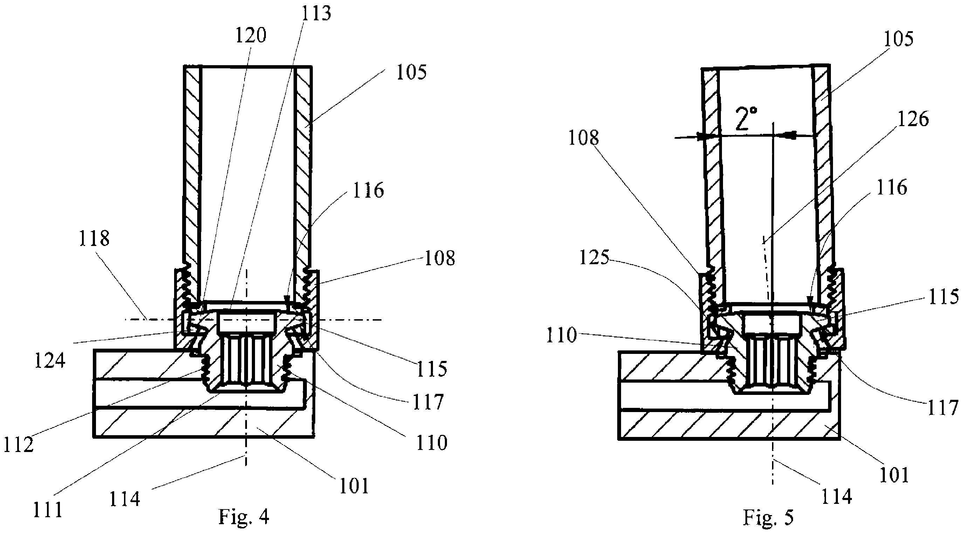

Depicted in fig. 4 is a solution of the invention for a connection or joint between a faucet body 101 and a water pipe. Thus, a coupler 110 has its first end 111 attached by threads 112 to the faucet body 101, and a second end 113 of the coupler is provided with an outward directed flange 115, present with its mid-line 118 at a right angle relative to the coupler's center axis 114. The coupler's 110 flange

115 attaches to an attachment nut's 108 inward directed bracket 120 , and between the attachment surfaces is also a ring 124.

The attachment nut 108 fastens the coupler 110 to an eccentric fitting 105 (or optionally directly to a water pipe). The coupler 110 of the invention enables the compensation for an installation error without extra stresses on the joint. The joint or connection between the eccentric fitting 105 and the faucet body 101, shown in fig. 4, is in a perpendicular position, thus naturally requiring no compensation. The coupler 110 of the invention differs from that of the prior art in the sense that the coupler's outward directed flange has its surfaces 116 and 117 shaped in a way different from the prior art solution (figs. 1-3).

The joint surfaces 116 and 117 of the coupler's 110 flange 115 are conical surfaces or spherical surfaces in an inclined position relative to a mid-plane 118 of the coupler's flange 115 which plane is at a right angle relative to a center ax 114 of the coupler. Such a solution provides a swimming/floating (flexible) connection, relieving the connection or joint of stresses resulting from installation errors or the like. Between the surface 117 of the coupler's 110 flange 115 and the attachment nut 108 is further fitted a ring 124.

Fig. 5 shows how the coupler 110 of the invention provides an installation error compensating floating connection between the faucet body 101 and the eccentric fitting 105. In fig. 5, the eccentric fitting 105 is askew by 2 degrees relative to the coupler's 110 center axis 114 and, at the same time, a center axis 126 of the attachment nut 108 is similarly askew. The coupler's 110 inclined surfaces or spherical surfaces 116 and 117 provide a floating joint between the eccentric fitting 105 and the faucet body 101.

By virtue of the surfaces 116 and 117 of the coupler's 110 flange 115, said surfaces being a type of surfaces different from planar surfaces perpendicular to the coupler's center axis, there is accomplished a functional solution of the invention for the joint or connection. The surfaces 116 and 117 of the above-described coupler 110 of the invention can be not only spherical surfaces but also other types of arcuate surfaces capable of providing a flexible joint.

The attachment nut 108 also has its joint surface 125, which is abutting against the surface 117 of the coupler's 110 bracket 115, in the form of an inclined surface, a spherical surface or another type arcuate surface, resulting in a similar effect on the joint.

According to the invention, the surfaces 116, 117 are respectively shaped as an inclined surface, a spherical surface or another type arcuate surface. Likewise, the mid-line 118 of the coupler's 110 flange 115 need not be in a perpendicular position relative to the coupler's center axis 114, but can be deviated therefrom.

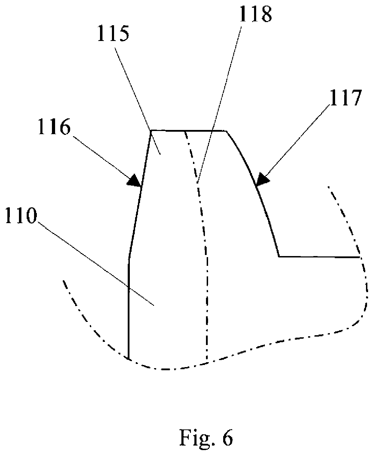

Fig. 6 shows still another embodiment regarding the shaping of the coupler's 110 flange 115. In this embodiment, the surface 117 facing an eccentric fitting is slightly inclined, and the surface about to face the attachment nut's joint surface is an arcuate surface. With the illustrated solution, the bracket's 115 mid-line becomes arcuate as well.

Described above by way of examples are various embodiments of the invention.

These are by no means limitative but the invention has its scope of protection determined by the scope of protection as defined in the appended claims.

## Claims

1. A joint apparatus for connecting a faucet and a water pipe, said apparatus comprising
- a coupler (110) having threads (112) at its first end (111), the coupler being configured to be attached by the threads (112) to a faucet body (101) and comprising at its second end (113) an outward directed flange (115) having a first surface (116) facing an end of the water pipe and a second surface (117), and
- an attachment nut (108) having at its first end threads configured to attach the attachment nut (108) to the water pipe or to an eccentric fitting (105) and comprising at its second end an inward directed bracket (120) configured to fasten the flange (115), said inward directed bracket (120) having a joint surface (125) configured to face the second surface (117) of the outward directed flange (115) of the coupler (110)
**characterized in that** the joint apparatus further comprising a ring (124) arranged between the second surface (117) of the coupler's (110) flange (115) and the joint surface (125) of the attachment nut's (108) bracket (120), which joint surface (125) is an inclined surface with respect to a plane perpendicular to the attachment nut's (108) center axis (126), and wherein the first surface (116) of the outward directed flange (115) and the second surface (117) of the outward directed flange (115) are inclined with respect to a plane perpendicular to the coupler's center axis, and wherein a shape of the at least one of the following: the first surface (116) of the outward directed flange (115) facing the end of the water pipe, the second surface (117) of the outward directed flange (115) facing the ring (124) is arcuate.

2. An apparatus according to claim 1, wherein the joint surface (125) is an arcuate surface.

3. An apparatus according to any of claims 1-2, further comprising a liner to be placed on the first surface (116) of the coupler's (119) flange (115) configured to seal the joint with the water pipe or the eccentric fitting (105).

## Patentansprüche

1. Verbindungsvorrichtung zum Verbinden eines Wasserhahns mit einem Wasserrohr, wobei die Vorrichtung Folgendes umfasst:
- eine Muffe (110), die ein Gewinde (112) an ihrem ersten Ende (111) aufweist, wobei die Muffe dazu ausgelegt ist, mittels des Gewindes (112) an einem Wasserhahnkörper (101) befestigt zu sein, und die an ihrem zweiten Ende (113) einen nach außen ausgerichteten Flansch (115) umfasst, der eine erste Fläche (116), die einem Ende des Wasserrohrs zugewandt ist, und eine zweite Fläche (117) aufweist, und
- eine Befestigungsmutter (108), die an ihrem ersten Ende ein Gewinde aufweist, das dazu ausgelegt ist, die Befestigungsmutter (108) am Wasserrohr oder an einem exzentrischen Fitting (105) zu befestigen, und die an ihrem zweiten Ende eine nach innen gerichtete Halterung (120) umfasst, die dazu ausgelegt ist, den Flansch (115) zu fixieren, wobei die nach innen gerichtete Halterung (120) eine Verbindungsfläche (125) aufweist, die dazu ausgelegt ist, der zweiten Fläche (117) des nach außen gerichteten Flanschs (115) der Muffe (110) zugewandt zu sein,
**dadurch gekennzeichnet, dass** die Verbindungsvorrichtung ferner einen Ring (124) umfasst, der zwischen der zweiten Fläche (117) des Flanschs (115) der Muffe (110) und der Verbindungsfläche (125) der Halterung (120) der Befestigungsmutter (108) angeordnet ist, wobei die Verbindungsfläche (125) eine in Bezug zu einer Ebene, die senkrecht zur Mittelachse (126) der Befestigungsmutter (108) verläuft, geneigte Fläche ist, und wobei die erste Fläche (116) des nach außen gerichteten Flanschs (115) und die zweite Fläche (117) des nach außen gerichteten Flanschs (115) in Bezug zu einer Ebene, die senkrecht zur Mittelachse der Muffe verläuft, geneigt sind und wobei für eine Form Folgendes gilt: die erste Fläche (116) des nach außen gerichteten Flanschs (115) ist dem Ende des Wasserrohrs zugewandt und/oder die zweite Fläche (117) des nach außen gerichteten Flanschs (115), die dem Ring (124) zugewandt ist, ist bogenförmig.

2. Vorrichtung nach Anspruch 1, wobei die Verbindungsfläche (125) eine bogenförmige Fläche ist.

3. Vorrichtung nach einem der Ansprüche 1-2, ferner eine Dichtung umfassend, die auf der ersten Fläche (116) des Flanschs (115) der Muffe (119) zu platzieren und dazu ausgelegt ist, die Verbindung zum Wasserrohr oder zum exzentrischen Fitting (105) abzudichten.

## Revendications

1. Appareil de raccord pour le raccordement d'un robinet et d'une conduite d'eau, ledit appareil comprenant
- une pièce d'accouplement (110) comportant des filets (112) au niveau de sa première extrémité (111), la pièce d'accouplement étant conçue pour être attachée, par le biais des filets (112), à un corps de robinet (101) et comprenant, au niveau de sa seconde extrémité (113), une collerette orientée vers l'extérieur (115) comportant une première surface (116) faisant face à une extrémité de la conduite d'eau et une seconde surface (117), et
- un écrou d'attache (108) comportant, au niveau de sa première extrémité, des filets conçus pour attacher l'écrou d'attache (108) à la conduite d'eau ou à une pièce de tuyauterie excentrique (105) et comprenant, au niveau de sa seconde extrémité, un épaulement orienté vers l'intérieur (120) conçu pour fixer la collerette (115), ledit épaulement orienté vers l'intérieur (120) comportant une surface de jointure (125) conçue pour faire face à la seconde surface (117) de la collerette orientée vers l'extérieur (115) de la pièce d'accouplement (110)
**caractérisé en ce que** l'appareil de raccord comprend en outre une bague (124) placée entre la seconde surface (117) de la collerette (115) de la pièce d'accouplement (110) et la surface de jointure (125) de l'épaulement (120) de l'écrou d'attache (108), ladite surface de jointure (125) étant une surface inclinée par rapport à un plan perpendiculaire à l'axe central (126) de l'écrou d'attache (108), et la première surface (116) de la collerette orientée vers l'extérieur (115) et la seconde surface (117) de la collerette orientée vers l'extérieur (115) étant inclinées par rapport à un plan perpendiculaire à l'axe central de la pièce d'accouplement, et une forme d'au moins l'un des éléments suivants : la première surface (116) de la collerette orientée vers l'extérieur (115) faisant face à l'extrémité de la conduite d'eau, la seconde surface (117) de la collerette orientée vers l'extérieur (115) faisant face à la bague (124), est arquée.

2. Appareil selon la revendication 1, dans lequel la surface de jointure (125) est une surface arquée.

3. Appareil selon l'une quelconque des revendications 1 et 2, comprenant en outre une garniture destinée à être placée sur la première surface (116) de la collerette (115) de la pièce d'accouplement (119), conçue pour rendre étanche la jointure du raccord avec la conduite d'eau ou la pièce de tuyauterie excentrique (105).
